# FASCICULE DE BREVET EUROPEEN

(11) **EP 4 229 553 B1**
(45) Date de publication et mention de la délivrance du brevet: **05.02.2025**
(21) Numéro de dépôt: 21852044.3
(22) Date de dépôt: 21.12.2021
(51) Int. Cl.: G06K 19/077

(54) **PROCÉDÉ DE FABRICATION D'UN IDENTIFIANT RFID**
VERFAHREN ZUR HERSTELLUNG EINES RFID
PROCESS FOR MANUFACTURING AN RFID

(30) Priorité: 31.12.2020 FR 2014286
(43) Date de publication de la demande: 23.08.2023
(73) Titulaire: Axem Technology, 94000 Creteil (FR)
(72) Inventeur: CARLE, Arnaud, 94100 Saint-Maur-des-Fosses (FR)
(74) Mandataire: Tranvouez, Edern Morgan
(86) Numéro de dépôt international: PCT/FR2021/052414
(87) Numéro de publication internationale: WO 2022/144517

(56) Documents cités:
- EP-A2- 1 746 651
- US-A1- 2007 056 683
- US-A1- 2007 141 760

## Description

La présente demande de brevet se rapporte au domaine de la fabrication des identifiants RFID, expression générique couvrant les « étiquettes RFID » et les « tags RFID ».

« RFID » est un acronyme anglais signifiant « Radio Frequency Identification ».

Un identifiant RFID comprend classiquement un substrat - formé en général d'une pluralité de couches de matériaux polymères, supportant une puce électronique et une antenne.

Un tel identifiant RFID peut ainsi recevoir et répondre à des requêtes radio émises par un émetteur / récepteur extérieur, sans contact.

Une « étiquette RFID » est obtenue par un procédé continu d'appariement de puces avec des antennes disposées sur un rouleau de substrat souple : le produit fini présente une certaine flexibilité.

Un « tag RFID » est obtenu par un assemblage paire par paire de puces avec des antennes, situées chacune sur un substrat rigide : le produit fini est beaucoup plus rigide qu'une étiquette RFID.

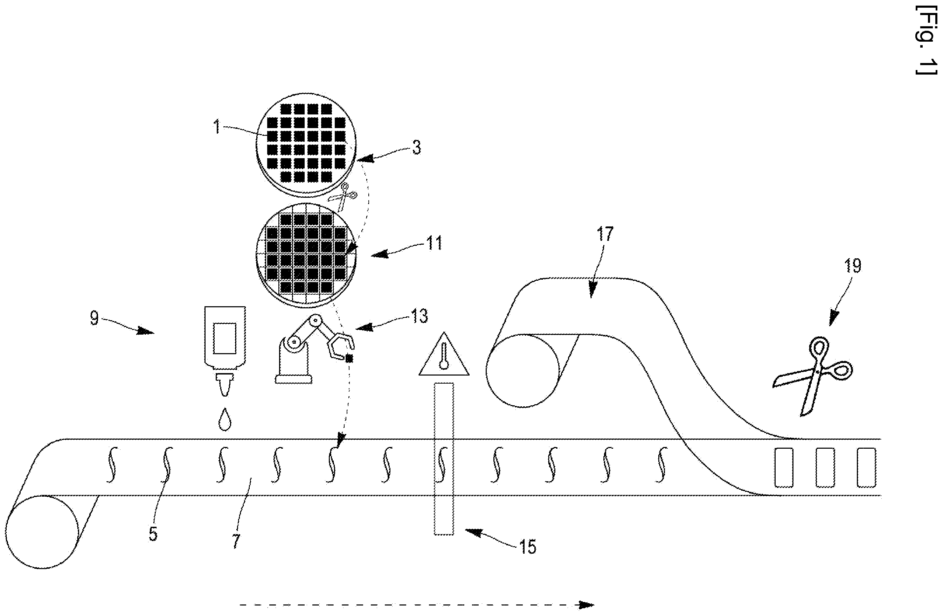

Un procédé classique de fabrication d'une étiquette RFID est illustré à la figure 1 ci-annexée : les puces électroniques 1 sont fabriquées sur un « wafer » 3 en silicium, sorte de plateau en verre supportant une pluralité de telle puces 1.

En parallèle, les antennes 5 sont fabriquées et déposées sur une bande de substrat en polymère 7, les plots de connexion de ces antennes étant recouverts d'une colle conductrice 9.

Les puces électroniques 1 sont découpées unitairement 11 dans le « wafer » 3, puis saisies une par un robot 13 et appliquées unitairement sur les antennes 5, de sorte que les plots de connexion des puces électroniques 1 et de ces antennes 5 se correspondent.

On procède ensuite au chauffage et/ou au pressage 15 de chaque paire de puce électronique 1 / antenne 5, de manière à faire polymériser la colle conductrice et à réaliser ainsi l'assemblage des puces électroniques 1 avec les antennes 5.

On vient ensuite recouvrir la bande de substrat en polymère 7 par un film de protection en polymère 17, qui est collé à la bande 7, et enfin on découpe en 19 chaque étiquette ainsi obtenue.

Le procédé de fabrication d'un tag RFID se différencie de celui d'une étiquette RFID en ceci que les antennes sont disposées sur un substrat relativement rigide découpé antenne par antenne, chaque ensemble substrat + antenne étant alors présenté à une puce avec laquelle il est assemblé par collage ou brasage.

Bien que relativement fiable et efficace, un tel procédé de fabrication d'étiquettes ou de tags RFID nécessite un grand nombre de manipulations qui, finalement, grèvent sérieusement le temps de production.

D'autres procédé de fabrications d'étiquettes ou tags RFID de l'art antérieur sont connus des documents EP 1746651 A2, US 2007/141760 et US 2007/056683 A1.

La présente invention a ainsi notamment pour but de fournir un procédé de fabrication améliorée, permettant de réduire significativement le temps de production d'identifiants RFID.

On atteint ce but de l'invention, ainsi que d'autres avantages qui résulteront de la description qui va suivre, avec un procédé de fabrication d'identifiants RFID comprenant chacun une puce électronique et une antenne, ce procédé comprenant les étapes consistant à :
- fabriquer une pluralité de puces électroniques sur une face d'un premier support,
- fabriquer une pluralité d'antennes sur une face d'un second support,
- recouvrir en une seule opération ladite face dudit premier support et/ou ladite face dudit second support d'une couche globale d'un agent de conduction électrique durcissable,
- appliquer ledit premier support contre ledit second support de sorte que lesdites faces viennent en vis-à-vis, et que chaque antenne vienne en vis-à-vis d'une puce électronique respective afin de s'assembler avec cette dernière en une seule opération et former une paire comprenant ladite puce électronique et ladite antenne,
- faire durcir ledit agent de conduction électrique de manière que ledit agent réalise une connexion électrique entre les puces électroniques et les antennes de chaque paire, et à
- découper chaque paire de puce électronique / antenne dudit ensemble.

Grâce à ces caractéristiques, il n'est plus nécessaire de découper chaque puce électronique préalablement à son assemblage avec son antenne correspondante, ni d'appliquer unitairement la couche d'agent de conduction électronique durcissable sur chaque antenne : l'ensemble des puces électroniques sont appliquées en une seule opération sur l'ensemble des antennes qui auront été revêtues au préalable d'une seule couche globale d'agent de conduction électrique durcissable.

On peut de la sorte gagner beaucoup de temps, en limitant le nombre d'opérations unitaires.

Suivant d'autres caractéristiques optionnelles du procédé selon invention, prises seules ou en combinaison :
- on utilise un agent de conduction électrique durcissable à la chaleur ;
- on utilise un agent de conduction électrique durcissable par pressage ;
- on utilise un agent de conduction électrique durcissable avec le temps ;
- on utilise comme agent de conduction électrique durcissable un flux de soudure, de manière à connecter électriquement les puces électroniques et les antennes de chaque paire par brasage : cette opération de brasage, bien maîtrisée, permet une connexion électrique précise et rapide des puces à leurs antennes respectives ;
- on insère de la résine entre les points de brasage reliant les puces électroniques à leurs antennes : cette résine, qui peut être insérée entre les deux supports sous vide par infusion, ou bien placée sous forme de feuilles de résine pré-imprégnée, permet d'augmenter la surface de liaison entre le support de puces électroniques et le support d'antennes, et de consolider l'empilage ainsi obtenu préalablement à l'opération de découpe des paires de puces / antennes ;
- on utilise comme agent de conduction électrique durcissable une colle conductrice, de manière à connecter électriquement les puces électroniques et les antennes de chaque paire par collage : une telle colle conductrice, qui peut être durcie par chauffage et/ou par pressage et/ou avec le temps, comprend des particules métalliques en suspension, permettant de réaliser des connexions électriques entre les puces électroniques et les antennes par écrasement du support de puces sur le support d'antennes ;
- on réalise l'alignement précis du support de puces électroniques par rapport au support d'antennes selon l'une des méthodes sélectionnées dans le groupe comprenant :
   - la réalisation de trous précisément positionnés dans chacun de ces supports, et l'introduction de goupilles de liaison dans ces trous,
   - la réalisation de trous précisément positionnés dans chacun de ces supports, et le placement de ces supports sur un plateau muni de pions de guidage venant s'insérer dans ces trous ;
   - la réalisation de trous précisément positionnés dans chacun de ces supports, et le placement de chacun de ces supports sur un plateau respectif muni de pions de guidage/de trous aptes à coopérer entre eux, les plateaux étant ensuite plaqués l'un contre l'autre par translation
   - la réalisation d'encoches périphériques dans chacun de ces supports, et le placement de ces supports sur un plateau muni de cales périphériques réglables radialement ;
   - le positionnement du support de puces électroniques par rapport au support d'antennes au moyen de mires optiques disposées sur ces supports et d'au moins une caméra stéréoscopique.

D'autres caractéristiques et avantages de l'invention ressortiront à la lecture de la description qui suit, en référence aux figures annexées, qui illustrent :
[Fig.1] un procédé de fabrication d'étiquettes RFID de la technique antérieure, tel qu'exposé en préambule de la présente description ;
[Fig.2] un procédé de fabrication d'étiquettes RFID selon la présente invention ;
[Fig.3] un procédé de positionnement du support de puces électroniques par rapport au support d'antennes ;
[Fig.4] une goupille de liaison intervenant dans le procédé illustré à la figure 3 ;
[Fig.5] une variante du procédé de positionnement du support de puces électroniques par rapport au support d'antennes ;
[Fig.6] une autre variante de procédé de positionnement ;
[Fig.7] encore une autre variante de procédé de positionnement ;
[Fig.8] encore une autre variante de procédé de positionnement ;
[Fig.9] encore une autre variante de procédé de positionnement, et
[Fig.10] l'illustration schématique d'une situation où les antennes présentent des dimensions supérieures à celles des puces. Pour plus de clarté, les éléments identiques ou similaires sont repérés par des signes de référence identiques ou similaires sur l'ensemble des figures.

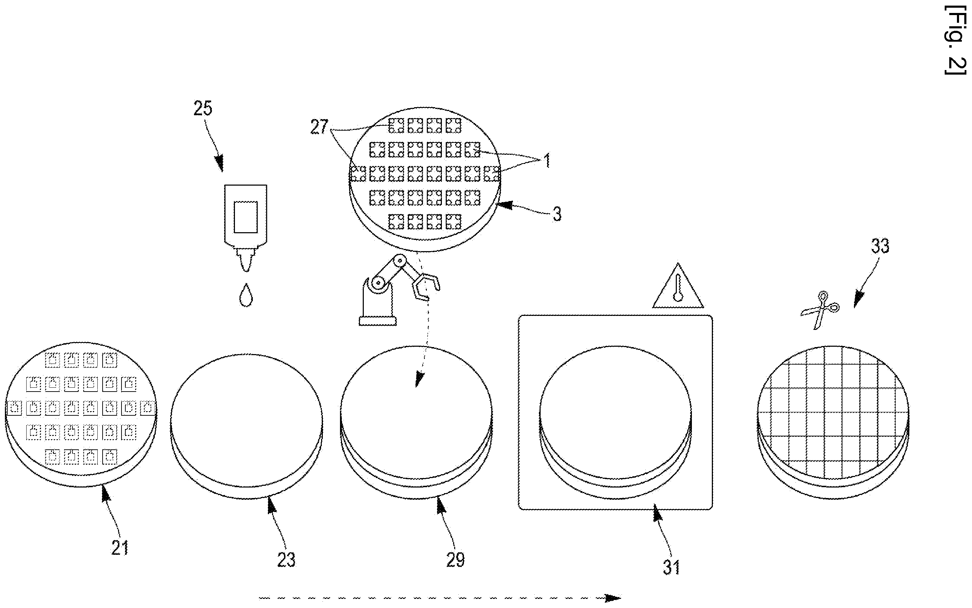

On se reporte à présent la figure 2, sur laquelle on peut voir que, dans le cadre du procédé selon invention, on part d'une part d'un support 3 de puces électroniques 1, et d'autre part d'un support 21 d'antennes 5, la disposition de ces puces électroniques 1 et de ces antennes 5 étant prévue pour que ces puces et ces antennes puissent venir exactement en correspondance lors de l'application du support 3 sur le support 21.

Le support 3 de puces 1 peut être formé par exemple à base de silicium, et le support 21 d'antennes 5 peut être formé à base de matériaux polymères, les contacts électriques des puces 1 et des antennes 5 étant affleurants avec les surfaces de leurs supports respectifs 3, 21.

D'autre matériaux sont bien entendu possibles pour les supports 3 et 21, tels que des matériaux céramiques, des polymères, de l'arséniure de gallium, du phosphure d'indium.

En 23, on applique sur l'ensemble de la face du support 21 sur laquelle sont situées les antennes 5, une couche d'un agent de conduction électrique durcissable 25.

Selon première variante, cet agent de conduction électrique peut-être un flux de soudure, permettant de relier par brasage les pattes conductrices des puces électroniques 1 au plots conducteurs correspondants des antennes 5.

Dans cette première variante, des boules de brasure 27 (couramment désignées par « bumps » en anglais) par exemple - mais de manière non limitative - à base d'or, auront préalablement été réalisées sur les pattes conductrices de chaque puce électronique 1, par exemple - mais de manière non limitative - par un procédé connu tel que le procédé WLSCP (« Wafer Level Chip Scale Packaging »).

Selon une deuxième variante, cet agent de conduction électrique peut-être une colle conductrice pouvant durcir à la chaleur et/ou par pressage et/ou avec le temps.

Une telle colle, connue en soi, peut comporter des billes métalliques par exemple d'étain ou d'argent en suspension.

Dans cette deuxième variante, des boules (ou « bumps ») d'or auront été déposées au préalable sur les pattes conductrices de chaque puce électronique 1.

Lors du retournement du support 3 de puces électroniques 1 face-à-face contre le support 21 d'antennes 5, les billes métalliques de la colle sont écrasées entre les boules d'or des puces électroniques 1 et les plots conducteurs correspondants des antennes 5, établissant ainsi des liaisons conductrices uniquement entre les pattes des puces 1 et les plots associés des antennes 5.

Postérieurement à l'étape 23 d'application d'un flux de soudure ou d'une colle conductrice sur la face du support 21 sur laquelle sont placées les antennes 5, on vient donc plaquer le support de puces 3 contre le support d'antennes 21, de sorte que les puces 1 et les antennes 5 viennent s'apparier (étape 29).

On vient ensuite chauffer et/ou presser et/ou on laisse le temps agir - selon la nature de l'agent de conduction électrique durcissable retenu (voile de soudure ou colle) l'ensemble ainsi obtenu (étape 31), de manière à faire fondre les boules de brasage et permettre une liaison par soudage, ou à durcir la colle conductrice.

A l'issue de cette étape de chauffage et/ou pressage et/ou d'attente, le support 3 de puces 1 est fermement lié au support 21 d'antennes 5, avec des chemins conducteurs établis entre les pattes des puces 1 et les plots associés des antennes 5.

On peut alors découper l'empilage ainsi obtenu (étape 33), et récupérer directement des étiquettes RFID comprenant chacune une puce électronique 1 et son antenne associée 5.

Par la suite, les étiquettes RFID ainsi obtenues peuvent être conditionnées de différentes manières, comme par exemple être fixées sur une bande de support en matériau polymère analogue à la bande 7 telle que décrite en préambule de la présente description.

On notera que dans le cas où l'on choisit le brasage pour relier électriquement les puces 1 à leurs antennes 5, il peut être utile de prévoir d'injecter de la résine entre les deux supports 3 et 21 juste après l'étape de chauffage 31, de manière à éviter que ces deux supports ne soient reliés l'un à l'autre que par les éléments de brasure reliant les pattes conductrices des puces 1 aux plots associés des antennes 5 : cette seule liaison est en effet relativement fragile, et il ne faudrait pas prendre le risque de casser certains chemins conducteurs ainsi obtenus, notamment lors de l'étape de découpe 33.

En variante de l'injection d'une telle résine, on peut aussi envisager de placer une feuille pré-imprégnée de résine entre les deux supports 3 et 21, une telle feuille présentant des évidements correspondant aux positions des puces 1 et des antennes associées 5.

Comme on l'aura compris à la lumière de ce qui précède, le procédé selon l'invention est extrêmement performant, car il permet d'assembler une pluralité de puces électroniques 1 avec une pluralité d'antennes 5 correspondantes en une seule opération, avec qui plus est l'enduction d'une couche d'agent conducteur durcissable en une seule opération également, sur la face du support 21 sur laquelle se trouvent les antennes 5, voire éventuellement, de manière alternative ou cumulative, sur la face du support 3 sur laquelle se trouvent les puces électroniques 1.

Le procédé selon l'invention permet ainsi une grande simplification du processus de fabrication et, *in fine,* un gain substantiel de temps de production.

Bien entendu, ce procédé suppose un alignement parfait du support 3 de puces électroniques 1 par rapport au support 21 d'antennes 5, de manière que les pattes conductrices des puces 1 viennent se situer parfaitement vis-à-vis des plots conducteurs des antennes 5 lors du retournement du support 3 sur le support 21.

Pour cela, différents procédés d'alignement peuvent être utilisés.

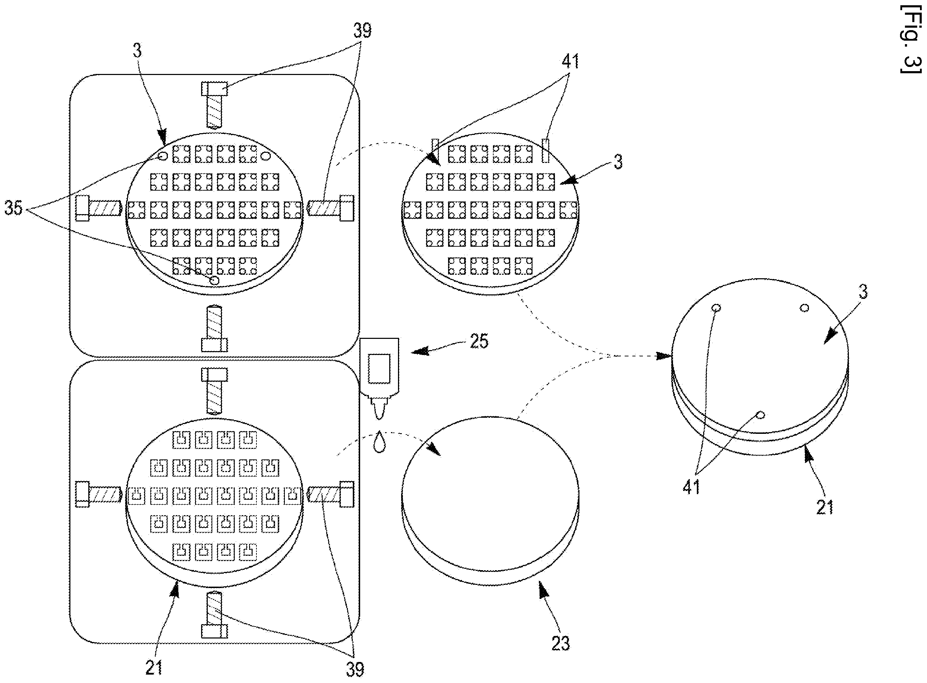

Selon une première variante, représentée à la figure 3, on réalise une pluralité - et de préférence trois - trous 35, 37, d'une part dans le support 3 de puces 1, et d'autre part dans le support 21 d'antennes 5, ces trous 35, 37 étant parfaitement positionnés au moyen d'une machine à commande numérique 39 de manière à pouvoir se correspondre avec précision.

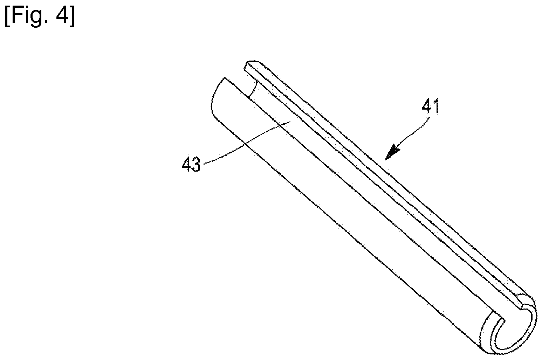

Postérieurement à l'étape 23 d'enduction de la face du support 21 d'antennes 5 au moyen de l'agent conducteur durcissable, on vient appliquer le support 3 contre le support 21 de manière que les trous respectifs 35,37 viennent en vis-à-vis, et on insère dans ces trous des goupilles 41 telles que celle représentée la figure 4, munies chacune d'une rainure radiale 43 permettant une certaine élasticité de serrage de ces goupilles à l'intérieur des trous 35, 37.

On soumet ensuite l'empilage ainsi obtenu à l'étape de chauffage et/ou de pressage et/ou d'attente 31.

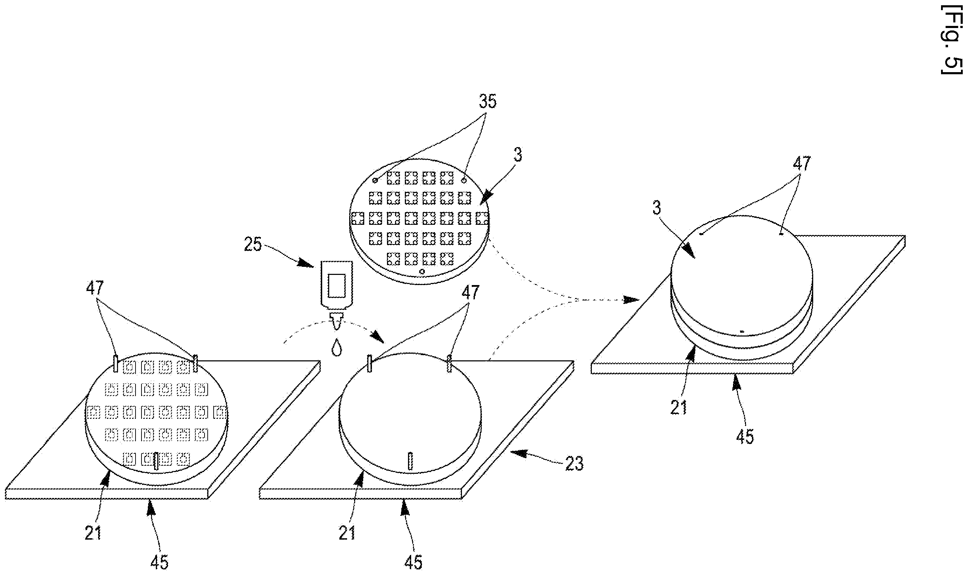

Selon une deuxième variante représentée à la figure 5, on place une pluralité - de préférence trois - pions 47 sur un plateau 45, ces pions étant aptes à s'insérer dans des trous correspondants 35, 37 formés avec précision dans le support de puces 3 et dans le support d'antennes 21.

On vient alors placer le support 21 sur le plateau 45 de sorte que les pions 47 viennent s'insérer dans les trous formés dans ce support 21, puis on réalise l'étape 23 d'enduction de ce support 21 au moyen de l'agent conducteur durcissable 25, puis on vient retourner le support de puces 3 sur le support d'antennes 21 de manière que les trous 35 préalablement formés dans ce support 3 viennent s'emboîter sur les pions 47, puis on soumet l'ensemble plateau 45 / empilage de supports ainsi obtenu à l'étape de chauffage et/ou de pressage et/ou d'attente 31.

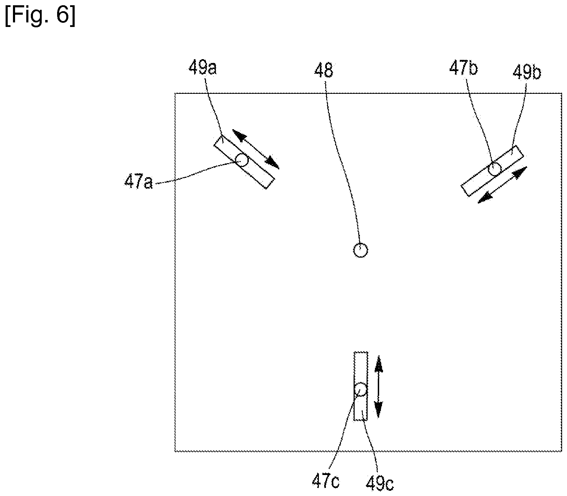

Selon une troisième variante représentée à la figure 6, on prévoit sur le plateau 45 une pluralité - de préférence trois - cales périphériques 47a, 47b, 47c réglables radialement en direction d'un point central 48, grâce à des rainures radiales 49a, 49b, 49c associées à chacune de ces cales ; des moyens de serrage asservis, non représentés, permettent de déplacer ces cales en direction du point central 48, puis d'immobiliser chacune de ces cales 47a, 47b, 47c dans leurs positions de réglage retenues.

Des encoches disposées à la périphérie du support de puces 3 et du support d'antennes 21, sont adaptés pour recevoir les cales périphériques 47a, 47b, 47c : après serrage de ces cales 47a, 47b, 47c dans les encoches respectives des supports 3 et 21, on peut obtenir un positionnement et une immobilisation parfaits de ces supports l'un par rapport à l'autre.

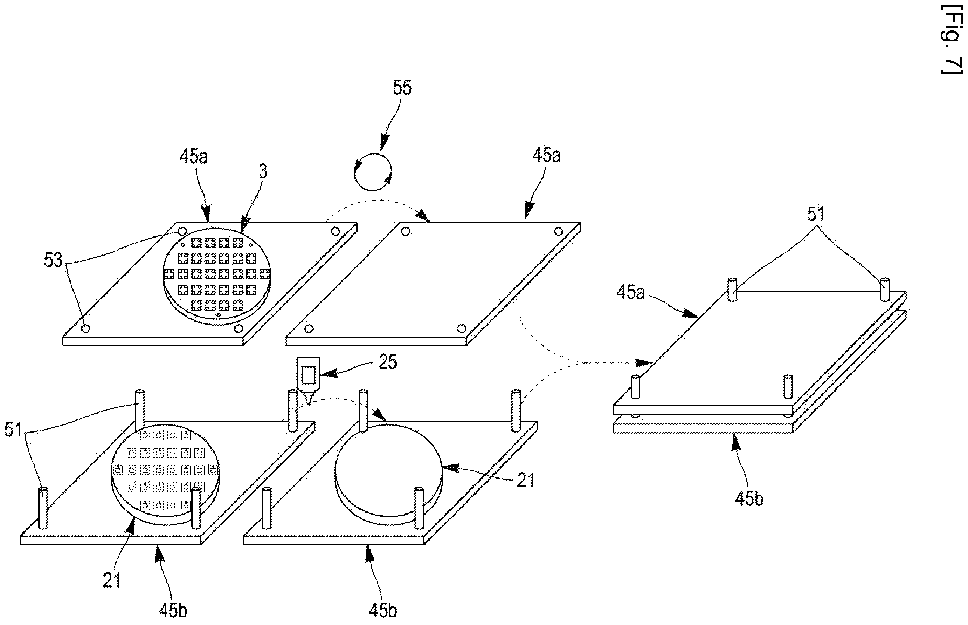

Selon une autre variante représentée à la figure 7, le support de puces 3 est fixé sur un premier plateau 45a avec des pions comme précédemment, le support d'antennes 21 est fixé sur un second plateau 45b également avec des pions, et des pions additionnels 51 fixés aux angles de l'un des deux plateaux sont adaptés pour coopérer avec des trous correspondants 53 disposés dans l'autre plateau.

L'appariement du plateau 45a sur lequel se trouve le support de puces 3 avec le plateau 45b sur lequel se trouve le support d'antennes 21 se fait alors par retournement de l'un de ces plateaux, comme indiqué en 55, puis par placage contre l'autre plateau, en utilisant les pions 51 et les trous 53 comme organes de guidage.

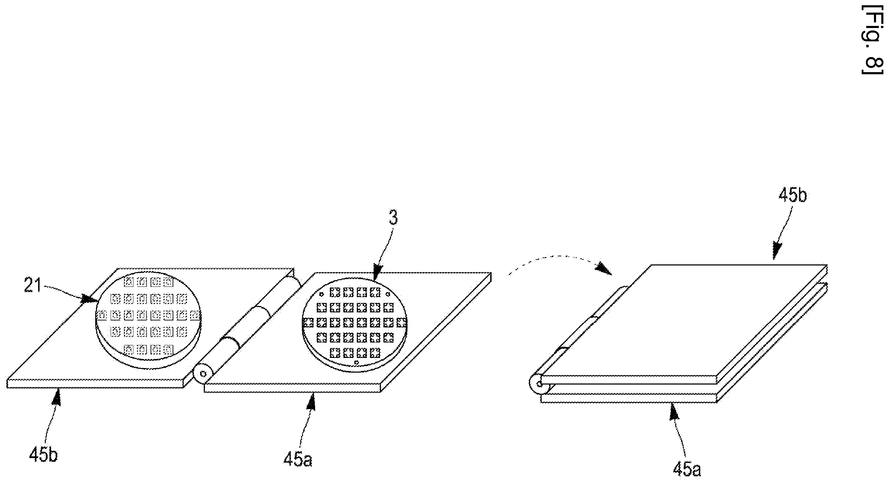

Dans la variante représentée à la figure 8, ce retournement s'effectue grâce à des plateaux 45a, 45b articulés entre eux au moyen d'une charnière.

Dans encore une autre variante de positionnement du support de puces 3 par rapport au support d'antennes 21, on peut utiliser des moyens optiques, tels que des mires : dans ce cas, on peut utiliser une ou plusieurs caméras stéréoscopiques et des bras robotisés pour venir positionner avec précision les deux supports l'un par rapport à l'autre.

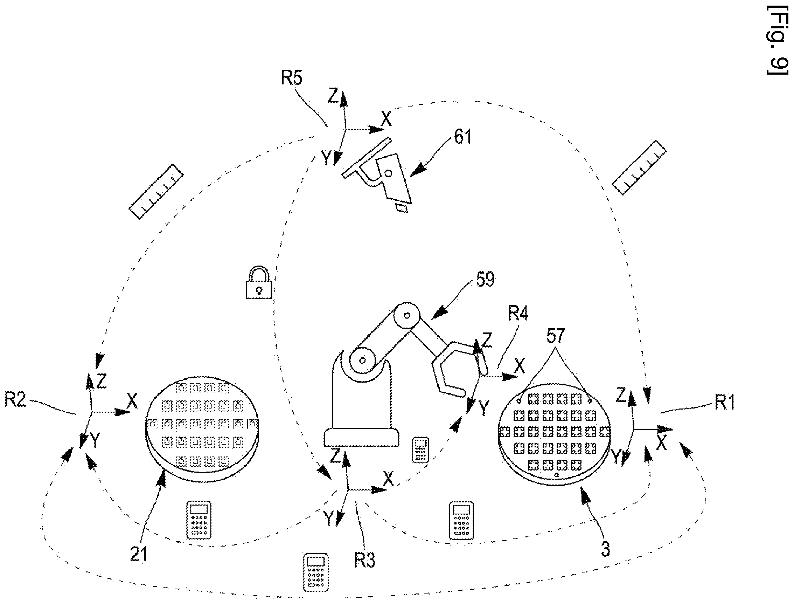

Une telle variante est représentée à la figure 9 : une pluralité de mires optiques 57 sont disposées sur le support de puces 3 et sur le support d'antennes 21.

Un bras robotisé 59 permet de manipuler chacun de ces deux supports 3, 21.

Une caméra stéréoscopique 61 permet de connaître avec précision la position des mires optiques associées à chacun des supports 3, 21.

Des repères tridimensionnels fixes R1, R2, R3, R4, R5 sont associés respectivement au support de puces 3, au support d'antennes 21, à la partie fixe du bras robotisé 59, à l'extrémité mobile de préhension de ce bras robotisé, et à la caméra stéréoscopique 61.

Les positions relatives de chacun de ces repères tridimensionnels étant connues à chaque instant, notamment grâce à la caméra stéréoscopique 61 qui, en filmant les mires disposées sur chacun des supports 3, 21, permet de connaître la position exacte dans l'espace de chacun de ces supports, l'opération consiste à piloter au moyen des informations ainsi obtenues les déplacements du bras de préhension du robot 59, de manière à amener en alignement parfait les repères R1 et R2 des supports 3, 21.

En alternative à ce système de mires optiques, on peut également utiliser des moyens de reconnaissance visuelle des supports 3, 21.

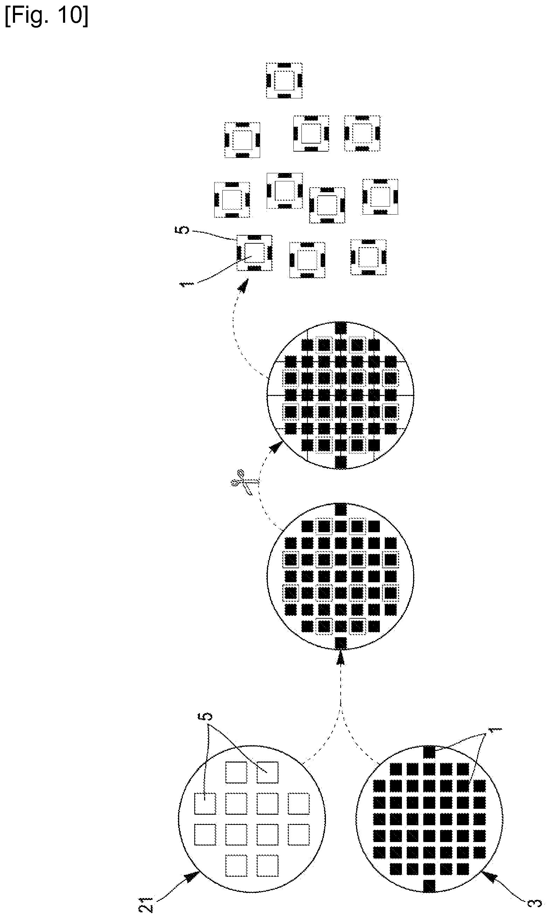

Selon un autre aspect du procédé selon mention représenté à la figure 10, et dans le cas où les antennes présentent des dimensions supérieures à celle des puces (ce qui peut être le cas avec certaines puces que l'on trouve dans le commerce), on peut envisager de ne connecter que certaines puces 1 du support 3 à des antennes 5 (moins nombreuses) du support 21.

Dans ce cas, un certain nombre de puces demeurent sans antenne, ce qui n'est pas vraiment gênant d'un point de vue économique, étant donné le coût très faible de fabrication de chaque puce.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Procédé de fabrication d'identifiants RFID comprenant chacun une puce électronique (1) et une antenne (5), ce procédé comprenant les étapes consistant à :
- fabriquer une pluralité de puces électroniques (1) sur une face d'un premier support (3),
- fabriquer une pluralité d'antennes (5) sur une face d'un second support (21),
- recouvrir en une seule opération ladite face dudit premier support (3) et/ou ladite face dudit second support (21) d'une couche globale d'un agent de conduction électrique durcissable,
- appliquer ledit premier support (3) contre ledit second support (21) de sorte que lesdites faces viennent en vis-à-vis, et que chaque antenne (5) vienne en vis-à-vis d'une puce électronique respective afin de s'assembler avec cette dernière en une seule opération et former une paire comprenant ladite puce électronique et ladite antenne,
- faire durcir ledit agent de conduction électrique de manière que ledit agent réalise une connexion électrique entre les puces électroniques (1) et les antennes (5) de chaque paire, et à
- découper chaque paire de puce électronique / antenne dudit ensemble.

2. Procédé selon la revendication 1, dans lequel on utilise un agent de conduction électrique durcissable à la chaleur.

3. Procédé selon l'une des revendications 1 ou 2, dans lequel on utilise un agent de conduction électrique durcissable par pressage.

4. Procédé selon l'une quelconque des revendications 1 à 3, dans lequel on utilise un agent de conduction électrique durcissable avec le temps.

5. Procédé selon la revendication 2, dans lequel on utilise comme agent de conduction électrique durcissable un flux de soudure, de manière à connecter électriquement les puces électroniques (1) et les antennes (5) de chaque paire par brasage.

6. Procédé selon la revendication 5, dans lequel on insère de la résine entre les points de brasage reliant les puces électroniques (1) à leurs antennes (5).

7. Procédé selon l'une quelconque des revendications 2 à 4, dans lequel on utilise comme agent de conduction électrique durcissable une colle conductrice, de manière à connecter électriquement les puces électroniques (1) et les antennes (5) de chaque paire par collage.

8. Procédé selon l'une quelconque des revendications précédentes, dans lequel on réalise l'alignement précis du support (3) de puces électroniques (1) par rapport au support (21) d'antennes (5) selon l'une des méthodes sélectionnées dans le groupe comprenant :
- la réalisation de trous (35, 37) précisément positionnés dans chacun de ces supports (3, 21), et l'introduction de goupilles de liaison (41) dans ces trous (35, 37),
- la réalisation de trous (35, 37) précisément positionnés dans chacun de ces supports, et le placement de ces supports sur un plateau muni de pions de guidage (47) venant s'insérer dans ces trous ;
- la réalisation d'encoches périphériques dans chacun de ces supports (3, 21) , et le placement de ces supports (3, 21) sur un plateau muni de cales périphériques (47a, 47b, 47c) réglables radialement ;
- la réalisation de trous précisément positionnés dans chacun de ces supports (3, 21), et le placement de chacun de ces supports sur un plateau respectif (45a, 45b) muni de pions de guidage (51)/de trous (53) aptes à coopérer entre eux, les plateaux (45a, 45b) étant ensuite plaqués l'un contre l'autre par translation ;
- le positionnement du support (3) de puces électroniques (1) par rapport au support (21) d'antennes (5) au moyen de mires optiques disposées sur ces supports et d'au moins une caméra stéréoscopique.

## Patentansprüche

1. Verfahren zum Herstellen von RFID-Identifikatoren, die jeweils einen Mikrochip (1) und eine Antenne (5) umfassen, wobei das Verfahren die folgenden Schritte umfasst, die aus Folgendem bestehen:
- Herstellen einer Vielzahl von Mikrochips (1) auf einer Fläche eines ersten Trägers (3),
- Herstellen einer Vielzahl von Antennen (5) auf einer Fläche eines zweiten Trägers (21),
- Beschichten der Fläche des ersten Trägers (3) und/oder der Fläche des zweiten Trägers (21) in einem einzigen Arbeitsschritt mit einer Gesamtschicht aus einem aushärtbaren Mittel zur elektrischen Leitung,
- Anbringen des ersten Trägers (3) an den zweiten Träger (21), so dass die Flächen einander gegenüberliegen und dass jede Antennen (5) einem jeweiligen Mikrochip gegenüberliegt, um mit letzterem in einem einzigen Arbeitsschritt zusammengefügt zu werden und ein Paar, das den Mikrochip und die Antenne umfasst, zu bilden,
- Aushärten des Mittels zur elektrischen Leitung, derart, dass das Mittel eine elektrische Verbindung zwischen den Mikrochips (1) und den Antennen (5) jedes Paars herstellt, und
- Ausschneiden jedes Paars aus Mikrochip und Antennen aus der Anordnung.

2. Verfahren nach Anspruch 1, wobei ein wärmeaushärtbares Mittel zur elektrischen Leitung verwendet wird.

3. Verfahren nach einem der Ansprüche 1 oder 2, wobei ein durch Pressen aushärtbares Mittel zur elektrischen Leitung verwendet wird.

4. Verfahren nach einem der Ansprüche 1 bis 3, wobei ein mit der Zeit aushärtbares Mittel zur elektrischen Leitung verwendet wird.

5. Verfahren nach Anspruch 2, wobei als aushärtbares Mittel zur elektrischen Leitung ein Lötflussmittel verwendet wird, um die Mikrochips (1) und die Antennen (5) jedes Paars durch Löten elektrisch zu verbinden.

6. Verfahren nach Anspruch 5, wobei zwischen den Lötpunkten, die die Mikrochips (1) mit ihren Antennen (5) verbinden, Harz eingefügt wird.

7. Verfahren nach einem der Ansprüche 2 bis 4, wobei als aushärtbares Mittel zur elektrischen Leitung ein leitfähiger Klebstoff verwendet wird, um die Mikrochips (1) und die Antennen (5) jedes Paars durch Kleben elektrisch zu verbinden.

8. Verfahren nach einem der vorhergehenden Ansprüche, wobei die genaue Ausrichtung des Trägers (3) der Mikrochips (1) im Verhältnis zu dem Träger (21) der Antennen (5) gemäß einer der Methoden umgesetzt wird, die aus der Gruppe ausgewählt sind, die Folgendes umfasst:
- Herstellen von Löchern (35, 37), die in jedem der Träger (3, 21) genau positioniert sind, und Einführen von Verbindungsstiften (41) in die Löcher (35, 37),
- Herstellen von Löchern (35, 37), die in jedem der Träger genau positioniert sind, und Platzieren der Träger auf einer Platte, die mit Führungszapfen (47) versehen ist, die in die Löcher eingeführt werden;
- Herstellen von umlaufenden Nuten in jedem der Träger (3, 21) und Platzieren der Träger (3, 21) auf einer Platte, die mit radial einstellbaren umlaufenden Abstandshaltern (47a, 47b, 47c) versehen ist;
- Herstellen von genau in jedem der Träger (3, 21) positionierten Löchern und Platzieren jedes der Träger auf einer jeweiligen Platte (45a, 45b), die mit Führungszapfen (51)/Löchern (53) versehen ist, die dazu ausgelegt sind, miteinander zusammenzuwirken, wobei die Platten (45a, 45b) anschließend durch Translation gegeneinander gedrückt werden;
- Positionieren des Trägers (3) der Mikrochips (1) im Verhältnis zum Träger (21) der Antennen (5) unter Verwendung optischer Testbilder, die auf den Trägern angeordnet sind, und mindestens einer stereoskopischen Kamera.

## Claims

1. A method for manufacturing RFID identifiers each comprising an electronic chip (1) and an antenna (5), this method comprising the steps of:
- manufacturing a plurality of electronic chips (1) on one face of a first support (3),
- manufacturing a plurality of antennae (5) on one face of a second support (21),
- covering in a single operation said face of said first support (3) and/or said face of said second support (21) with an overall layer of a curable electrical conduction agent,
- applying said first support (3) against said second support (21) so that said faces are opposite each other, and each antenna (5) is opposite a respective electronic chip in order to assemble with the latter in a single operation and form a pair comprising said electronic chip and said antenna,
- curing said electrical conduction agent so that said agent makes electrical connection between the microchips (1) and antennae (5) of each pair, and
- cutting each chip/antenna pair of said assembly.

2. The method according to claim 1, wherein a heat-curable electrical conduction agent is used.

3. The method according to one of claims 1 or 2, wherein a press-curable electrical conduction agent is used.

4. The method according to any of claims 1 to 3, wherein a time-curable electrical conduction agent is used.

5. The method according to claim 2, wherein a welding flow is used as a curable electrical conduction agent, so as to electrically connect the electronic chips (1) and antennae (5) of each pair by soldering.

6. The method according to claim 5, wherein resin is inserted between the soldering points connecting the electronic chips (1) to their antennae (5).

7. The method according to any of claims 2 to 4, wherein a conductive adhesive is used as a curable electrical conduction agent, so as to electrically connect the electronic chips (1) and the antennae (5) of each pair by adhering.

8. The method according to any of the preceding claims, wherein precise alignment of the support (3) of electronic chips (1) relative to the support (21) of antennae (5) is carried out according to one of the methods selected from the group comprising:
- making precisely positioned holes (35, 37) in each of these supports (3, 21), and introducing bonding pins (41) into these holes (35, 37),
- making precisely positioned holes (35, 37) in each of these supports, and placing these supports on a tray provided with guide pins (47) to be inserted into these holes;
- making peripheral notches in each of these supports (3, 21), and placing these supports (3, 21) on a tray provided with radially adjustable peripheral wedges (47a, 47b, 47c);
- making precisely positioned holes in each of these supports (3, 21), and placing each of these supports on a respective tray (45a, 45b) provided with guide pins (51)/holes (53) able to cooperate with each other, the trays (45a, 45b) then being pressed against each other by translation;
- positioning the support (3) of electronic chips (1) relative to the support (21) of antennae (5) by means of optical sights disposed on these supports and at least one stereoscopic camera.
